# EUROPEAN PATENT APPLICATION

(11) **EP 4 385 918 A1**
(43) Date of publication of application: **19.06.2024**
(21) Application number: 22214303.4
(22) Date of filing: 16.12.2022
(51) Int. Cl.: B65D 73/00, C08F 8/50, C08K 5/14, C08L 23/12, C08L 23/26

(54) **PACKAGE FOR DIRECT CONTACT WITH FOOD**

(71) Applicant: SABIC Global Technologies B.V., 4612 PX Bergen op Zoom (NL)
(72) Inventor: VACHON, Jerome, 6160 GA Geleen (NL); BEYENS, Dries, 6160 GA Geleen (NL); HERKLOTS, Marc, 6160 GA Geleen (NL)
(74) Representative: Sabic Intellectual Property Group

(57) **Abstract**

The present invention relates to a package for direct contact with food, the present invention further relates to the process for the preparation of such package. A further aspect of the present invention relates to the use of such package. The package according to the invention maintains better the taste of the food in the package.

## Description

The present invention relates to a package for direct contact with food, the present invention further relates to the process for the preparation of such package. A further aspect of the present invention relates to the use of such package.

Package - especially package that is made in plastic - for direct contact with food is well known in the art, for example: EP2835051A1 discloses packaging for food having antifungal properties, that it comprises a package of polyethylene terephthalate (PET) with an antifungal agent incorporated into its surface. Other than PET, such package is also widely made by polypropylene thanks to the balance of mechanical properties and its wide availability. The polypropylene may be peroxide shifted to improve the versatility of the production plant. However package made in polypropylene, especially peroxide shifted polypropylene may have a negative impact on the flavor of the food that is in contact with said package, e.g. the food's flavor may degrade and develop a "plastic" taste which gives the consumer a perception the food is contaminated. Means to improve this aspect is also disclosed in the art, e.g. US20050129812A1 discloses a method of transferring an off-odor eliminating compound to a product comprising the steps of: creating a package having an interior; placing a source of said off-odor eliminating compound within said interior; and contacting the product with said source. Therefore there is still a need in the industry for a package for direct contact with food that has little or no influence on the taste of the food in the package, in other word, preserve or maintain the taste of the food in the package especially not by the use of an absorbent.

This need is satisfied by a package for direct contact with food comprising a polypropylene, wherein the melt flow rate (MFR) of the polypropylene is in the range from 15 to 100 g/10min as determined according to ISO 1133-1:2011 (230 °C, 2.16 kg), wherein the production process of the polypropylene comprises
- a peroxide shifting step wherein the product of the peroxide shifting step is in pellet form and
- a venting step wherein the polypropylene in pellet form obtained in the peroxide shifting step is vented in a purge gas, wherein the duration of the venting step is at least 24hr, wherein the temperature of the purge gas is at least 100 °C, wherein the throughput of the purge gas is at least 15 normal cubic meter per hour per cubic meter of the polypropylene in pellet form, wherein a normal cubic meter purge gas is a cubic meter of purge gas at a temperature of 23°C and a pressure of 1 standard atmosphere, wherein the cubic meter of the polypropylene in pellet form is calculated by dividing the mass of the polypropylene in pellet form by the bulk density of the polypropylene in pellet form.

The inventor of the present invention surprisingly found that the package according to the invention maintains better the taste of food in the package.

### Polypropylene

The polypropylene according to the invention has a melt flow rate (MFR) in the range from 15 to 100 g/10min, preferably from 35 to 90 g/10min, preferably from 53 to 85 g/10min as determined according to ISO 1133-1:2011 (230 °C, 2.16 kg)

The polypropylene according to the invention may be a propylene homopolymer, a propylene random copolymer or a heterophasic propylene copolymer. Preferably the polypropylene is a heterophasic propylene copolymer.

Preferably the heterophasic propylene copolymer comprises 13 to 20 wt% ethylene-propylene copolymer based on the total amount of the heterophasic propylene copolymer. Preferably the amount of moiety derived from ethylene is in the range from 25 to 55 wt%, preferably from 35 to 52 wt% based on the total amount of the ethylene-propylene copolymer.

Preferably the heterophasic propylene copolymer further comprises a propylene homopolymer matrix, wherein the amount of the propylene homopolymer matrix is in the range of 80 to 87 wt% based on the total amount of the heterophasic propylene copolymer.

In a preferred embodiment, the sum of the propylene homopolymer matrix and the ethylene-propylene copolymer is 100wt% based on the heterophasic propylene copolymer.

The production process of the polypropylene typically starts with a polymerization step, for example, a multistage polymerization, such as bulk polymerization, gas phase polymerization, slurry polymerization, solution polymerization or any combinations thereof. Any conventional catalyst systems, for example, Ziegler-Natta or metallocene may be used. Such polymerization steps and catalysts are described, for example, in WO06/010414; Polypropylene and other Polyolefins, by Ser van der Ven, Studies in Polymer Science 7, Elsevier 1990; WO06/010414, US4399054 and US4472524. Preferably, the production process of the polypropylene comprises a polymerization step prior to the peroxide shifting step and the venting step, wherein the polymerization step is performed in the presence of a Ziegler-Natta catalyst. Preferably the Ziegler-Natta catalyst of the present invention is free of phthalate, for example the catalyst comprises compounds of a transition metal of Group 4 to 6 of IUPAC, a Group 2 metal compound and an internal donor wherein said internal donor is a compound selected from optionally substituted malonates, maleates, succinates, glutarates, cyclohexene-1,2-dicarboxylates, citraconate ester, benzoates and derivatives and/or mixtures thereof. Preferably the Ziegler-Natta catalyst comprises a citraconate ester.

The production process of the polypropylene comprises a peroxide shifting step wherein the product of the peroxide shifting step is in pellet form.

The peroxide shifting step is widely used to increase the MFR of a polypropylene, the peroxide shifting step typically takes place in an extruder by adding peroxide which at elevated temperatures initiate a free radical chain reaction resulting in beta-scission of polypropylene molecules. Examples of suitable peroxides include organic peroxides having a decomposition half-life of less than 1 minute at the average process temperature during extrusion. Suitable organic peroxides include but are not limited to dialkyl peroxides, e.g. dicumyl peroxides, peroxyketals, peroxycarbonates, diacyl peroxides, peroxyesters and peroxydicarbonates. Specific examples of these include benzoyl peroxide, dichlorobenzoyi peroxide, dicumyl peroxide, di-tert-butyl peroxide, 2,5-dimethyl-2,5-di(peroxybenzoato)-3-hexene, 1,4-bis(tert-butylperoxyisopropyl)benzene, lauroyl peroxide, tert-butyl peracetate, a,a'-bis(tert-butylperoxy)diisopropylbenzene (Luperco^{®} 802), 2,5- dimethyl-2,5-di(tert-butylperoxy)-3-hexene, 2,5-dimethyl-2,5-di(tert-butylperoxy)-hexane, tert-butyl perbenzoate, tert-butyl perphenylacetate, tert-butyl per-sec-octoate, tert-butyl perpivalate, cumyl perpivalate, cumene hydroperoxide, diisopropyl benzene hydroperoxide, 1 ,3-bis(t-butylperoxy- isopropyl)benzene, dicumyl peroxide, tert-butylperoxy isopropyl carbonate and any combination thereof. Preferably, a dialkyl peroxides is employed in the process according to the present invention. More preferably, the peroxide is a,a'-bis-(tert-butylperoxy)diisopropylbenzene, 2,5- dimethyl-2,5-di(tert-butylperoxy)-hexane or 3,6,9-Triethyl-3,6,9-trimethyl-1 ,4,7-triperoxonane. Preferably, the peroxide is selected from the group of non-aromatic peroxides.

Preferably, the peroxide shifting step has a shifting ratio of at least 1.5 wherein the shifting ratio is the ratio between the MFR of the polypropylene and the MFR of the polypropylene prior to shifting, wherein the MFR is determined according to ISO 1133-1:2011 (230 °C, 2.16 kg). Preferably the shifting ration is at most 20, preferably at most 15.

Preferably the bulk density of the polypropylene in pellet form is in the range from 465 to 777 kg/m3, preferably in the range from 512 to 653 kg/m3 as determined by ISO 60:1977.

The production process of the polypropylene further comprises a venting step wherein the polypropylene in pellet form obtained in the peroxide shifting step is vented in a purge gas, wherein the duration of the venting step is at least 24hr, wherein the temperature of the purge gas is at least 100 °C, wherein the throughput of the purge gas is at least 15, preferably at least 20, preferably at least 25, more preferably at least 30 normal cubic meter per hour per cubic meter of the polypropylene in pellet form, wherein a normal cubic meter purge gas is a cubic meter of purge gas at a temperature of 23°C and a pressure of 1 standard atmosphere, wherein the cubic meter of the polypropylene in pellet form is calculated by dividing the mass of the polypropylene in pellet form by the bulk density of the polypropylene in pellet form.

Preferably the venting step is performed in a vessel, the pressure inside the vessel is preferably in the range from 0.95 to 1.51 standard atmosphere, more preferably in the range from 1.01 to 1.22 standard atmosphere. The pressure inside the vessel can for example be measured by a sensor placed in the vessel.

A vessel for venting purpose typically has an inlet and an outlet for the polypropylene in pellet form. Preferably the inlet for the polypropylene in pellet form is located on the top of the vessel and the outlet for the polypropylene in pellet form is located in the bottom of the vessel. A vessel for venting purpose also typically has an inlet and an outlet for the purge gas. It is especially preferred that the inlet for the purge gas is located in the bottom of the vessel and the outlet for the purge gas is located on the top of the vessel. Such configuration could lead a better venting effect.

The venting step can be performed in continuous or batch manner. "continuous" means that the volume of the polypropylene in pellet form is moving continuously, i.e. not intermittently. The "continuous" manner can be done by continuously feeding and extracting the polypropylene in pellet form into and from the vessel. "Batch" means that a certain amount of polypropylene in pellet form is fed into the vessel with the outlet for the polypropylene in pellet form closed. Then both inlet and outlet for polypropylene in pellet form are closed and the venting starts. In the end the polypropylene in pellet form is extracted from the outlet for the polypropylene in pellet form.

Preferably the venting step is performed in batch manner.

Preferably the filling rate of the vessel is in the range from 30 to 95%, preferably in the range from 50 to 93%, more preferably from 60 to 90%, wherein the filling rate of the vessel is calculated as the ratio between the volume of the polypropylene in pellet form and the internal volume of the vessel.

Preferably duration of the venting step is at least 48 hr, more preferably at least 60 hr, even more preferably at least 72 hr. The duration of the venting step can for example be counted as the duration that the polypropylene in pellet form is exposed to the purge gas of at least 100 °C.

Preferably the temperature of the purge gas is at least 110 °C, preferably at least 112 °C, preferably the temperature of the purge gas is in the range of 115 to 130 °C. The temperature of the purge gas can for example be measured by a temperature sensor located in the inlet for the purge gas, or by a temperature sensor located in the vessel. It is known for the skilled person that the temperature of the purge gas may vary in the vessel at different locations especially after the polypropylene in pellet form is freshly fed into the vessel.

It is known to the skilled person that the venting step does not have influence on the size or dimension of the polypropylene in pellet form.

### Package

In a following step the polypropylene in pellet form is formed into a package, the package can for example a pouch, a tray or a film. Preferably the package has a thickness in the range from 0.01 to 0.6 mm, preferably from 0.03 to 0.4 mm, even more preferably from 0.04 to 0.2 mm.

Preferably the polypropylene in pellet form is injection moulded into a package.

The package according to the invention is for direct contact with food, preferably the food is for direct consumption, e.g. the food is fresh fruit, biscuit, soft drink etc.

The present invention also relates to a process for the preparation of the package according to the invention comprises the steps of
a) providing a polypropylene in pellet form according to the invention;
b) forming - preferably by injection molding - the polypropylene in pellet form obtained in the venting step into a package.

In a preferred embodiment, the present invention relates to a process for the preparation of the package comprising the steps of
a) providing a polypropylene, wherein the melt flow rate (MFR) of the polypropylene is in the range from 15 to 100 g/10min as determined according to ISO 1133-1:2011 (230 °C, 2.16 kg), wherein the production process of the polypropylene comprises
   - a peroxide shifting step wherein the product of the peroxide shifting step is in pellet form and
   - a venting step wherein the polypropylene in pellet form obtained in the peroxide shifting step is vented in a purge gas, wherein the duration of the venting step is at least 24hr, wherein the temperature of the purge gas is at least 100 °C, wherein the throughput of the purge gas is at least 15 normal cubic meter per hour per cubic meter of the polypropylene in pellet form, wherein a normal cubic meter purge gas is a cubic meter of purge gas at a temperature of 23°C and a pressure of 1 standard atmosphere, wherein the cubic meter of the polypropylene in pellet form is calculated by dividing the mass of the polypropylene in pellet form by the bulk density of the polypropylene in pellet form;
b) forming - preferably by injection molding - the polypropylene in pellet form obtained in the venting step into a package.

The present invention further relates to the use of a package for direct contact with food comprising polypropylene according to the invention to maintain the taste of food in the package.

In a preferred embodiment, the present invention relates to use of a package for direct contact with food comprising a polypropylene, wherein the melt flow rate (MFR) of the polypropylene is in the range from 15 to 100 g/10min as determined according to ISO 1133-1:2011 (230 °C, 2.16 kg), wherein the production process of the polypropylene comprises
- a peroxide shifting step wherein the product of the peroxide shifting step is in pellet form and
- a venting step wherein the polypropylene in pellet form obtained in the peroxide shifting step is vented in a purge gas, wherein the duration of the venting step is at least 24hr, wherein the temperature of the purge gas is at least 100 °C, wherein the throughput of the purge gas is at least 15 normal cubic meter per hour per cubic meter of the polypropylene in pellet form, wherein a normal cubic meter purge gas is a cubic meter of purge gas at a temperature of 23°C and a pressure of 1 standard atmosphere, wherein the cubic meter of the polypropylene in pellet form is calculated by dividing the mass of the polypropylene in pellet form by the bulk density of the polypropylene in pellet form
   to maintain the taste of food in the package.

In avoidance of any confusion, the polypropylene in pellet form according to the invention has the same meaning as the polypropylene according to the invention in pellet form.

### Experiments

### Material

PP1 is an heterophasic propylene copolymer with a grade name FPC70 commercially available from SABIC, PP1 has an MFR of 70 g/10min as measured according to ISO 1133-1:2011 at 230°C, 2.16 kg. The production process of PP1 comprises a step of peroxide shifting. PP1 is in pellet form with a bulk density of 534 kg/m³ as determined by ISO 60:1977.

### Venting operation

Vessel: A vessel was used for venting operation. The vessel is substantially in the form of an upstanding cylinder in vertical direction. The vessel has a feeding port for polypropylene and an outlet for purge gas on top and a discharging point for polypropylene and an inlet for purge gas in bottom
Operation: The venting operation of PP1 was performed in batch. 40 ton PP1 was fed into the vessel and maintained in the vessel for 48h for venting. The ratio between the bulk volume of PP1 and the internal volume of the vessel is 0.75. Air was used as purge gas with a throughput of 2400 Nm³/hr, wherein Nm³ is normal cubic meter which means the cubic meter of purge gas at room temperature (23°C) and a pressure of 1 atmosphere (i.e. ambient pressure). Before entering the vessel, the air was heated to 115°C as determined with a thermal couple placed in the air. After 48hr of venting, PP1 was discharged from the discharging point for measurement.

### Measurement

Taste transfer via triangle test was carried out to identify the influence of taste from the venting step by assessing whether there is perceptible taste transfer from PP1 (vented or non-vented) to the food simulant.

The reference sample is 180 ml distilled water (as food simulant) placed in a glass beaker;

Samples with PP1 (vented or non-vented) were prepared by placing 9.75 g PP1 in 180 ml distilled water in a first glass beaker. Since PP1 has a lower density than water, a second glass beaker was placed in the first glass beaker to submerge PP1 in the distilled water.

All the samples were stored at 70 °C for 3 hours. Then all the samples are placed at room temperature (23°C) for 1 hour.

The triangle test was carried out according to ISO 4120:2021 with 6 well-trained panelists (6 Ph.D in flavor chemistry) to identify whether perceptible difference exists between the taste of reference sample and of sample with PP1 (vented or non-vented). The assessment on the taste of samples was performed retronasally (sip and swallow) by the panelists. The detail measurement procedure is explained in ISO 4120:2021 chapter 7. The result of triangle test is shown in Table 1:

**Table 1**

| | Number of correct identification | Note |
|---|---|---|
| Sample with non-vented PP1 vs reference | 9/12 | Alpha risk = 0.01 |
| Sample with vented PP1 vs reference | 2/12 | No difference |

According to Table 1, it is evident that perceptible difference exists between the tastes of the reference (distilled water in glass) and of the sample with non-vented PP1 (distilled water in contact with non-vented PP1) with a confidence level of 99% (Alpha risk = 0.01). In contrast, no difference can be identified between the tastes of reference and sample with vented PP1. This indicates that venting operation of PP1 is effective in maintaining the taste of water that is in contact with PP1.

## Claims

1. Package for direct contact with food comprising a polypropylene, wherein the melt flow rate (MFR) of the polypropylene is in the range from 15 to 100 g/10min as determined according to ISO 1133-1:2011 (230 °C, 2.16 kg), wherein the production process of the polypropylene comprises
- a peroxide shifting step wherein the product of the peroxide shifting step is in pellet form and
- a venting step wherein the polypropylene in pellet form obtained in the peroxide shifting step is vented in a purge gas, wherein the duration of the venting step is at least 24hr, wherein the temperature of the purge gas is at least 100 °C, wherein the throughput of the purge gas is at least 15 normal cubic meter per hour per cubic meter of the polypropylene in pellet form, wherein a normal cubic meter purge gas is a cubic meter of purge gas at a temperature of 23°C and a pressure of 1 standard atmosphere, wherein the cubic meter of the polypropylene in pellet form is calculated by dividing the mass of the polypropylene in pellet form by the bulk density of the polypropylene in pellet form.

2. Package according to claim 1 wherein the MFR of the polypropylene is in the range from 35 to 90 g/10min, preferably from 53 to 85 g/10 as determined according to ISO 1133-1:2011 (230 °C, 2.16 kg).

3. Package according to any one of the previous claims wherein the duration of the venting step is at least 48 hr.

4. Package according to any one of the previous claims wherein the temperature of the purge gas is at least 110 °C, preferably at least 112 °C.

5. Package according to any one of the previous claims wherein the throughput of the purge gas is at least 20, preferably at least 25, more preferably at least 30 normal cubic meter per hour per cubic meter of the polypropylene in pellet form.

6. Package according to any one of the previous claims wherein the bulk density of the polypropylene in pellet form is in the range from 465 to 777 kg/m3, preferably in the range from 512 to 653 kg/m³ as determined by ISO 60:1977.

7. Package according to any one of the previous claims wherein the polypropylene is a heterophasic propylene copolymer, preferably the heterophasic propylene copolymer comprises 13 to 20 wt% ethylene-propylene copolymer.

8. Package according to any one of the previous claims wherein the peroxide shifting step has a shifting ratio of at least 1.5 wherein the shifting ratio is the ratio between the MFR of the polypropylene and the MFR of the polypropylene prior to shifting, wherein the MFR is determined according to ISO 1133-1:2011 (230 °C, 2.16 kg).

9. Package according to any one of the previous claims wherein the food is for direct consumption.

10. Package according to any one of the previous claims wherein the venting step is performed in a vessel, the pressure inside the vessel is preferably in the range from 0.95 to 1.51 standard atmosphere, more preferably in the range from 1.01 to 1.22 standard atmosphere.

11. Package according to any one of the previous claims wherein production process of the polypropylene comprises a polymerization step prior to the peroxide shifting step and the venting step, wherein the polymerization step is performed in the presence of a Ziegler-Natta catalyst.

12. Package according to claim 11, wherein the Ziegler-Natta catalyst comprises a citraconate ester.

13. Process for the preparation of the package according to any one of the previous claims comprising the steps of
a) providing a polypropylene, wherein the melt flow rate (MFR) of the polypropylene is in the range from 15 to 100 g/10min as determined according to ISO 1133-1:2011 (230 °C, 2.16 kg), wherein the production process of the polypropylene comprises
- a peroxide shifting step wherein the product of the peroxide shifting step is in pellet form and
- a venting step wherein the polypropylene in pellet form obtained in the peroxide shifting step is vented in a purge gas, wherein the duration of the venting step is at least 24hr, wherein the temperature of the purge gas is at least 100 °C, wherein the throughput of the purge gas is at least 15 normal cubic meter per hour per cubic meter of the polypropylene in pellet form, wherein a normal cubic meter purge gas is a cubic meter of purge gas at a temperature of 23°C and a pressure of 1 standard atmosphere, wherein the cubic meter of the polypropylene in pellet form is calculated by dividing the mass of the polypropylene in pellet form by the bulk density of the polypropylene in pellet form;
b) forming the polypropylene in pellet form obtained in the venting step into a package.

14. Process according to claim 13, wherein step b) is performed by injection molding.

15. Use of a package for direct contact with food comprising a polypropylene, wherein the melt flow rate (MFR) of the polypropylene is in the range from 15 to 100 g/10min as determined according to ISO 1133-1:2011 (230 °C, 2.16 kg), wherein the production process of the polypropylene comprises
- a peroxide shifting step wherein the product of the peroxide shifting step is in pellet form and
- a venting step wherein the polypropylene in pellet form obtained in the peroxide shifting step is vented in a purge gas, wherein the duration of the venting step is at least 24hr, wherein the temperature of the purge gas is at least 100 °C, wherein the throughput of the purge gas is at least 15 normal cubic meter per hour per cubic meter of the polypropylene in pellet form, wherein a normal cubic meter purge gas is a cubic meter of purge gas at a temperature of 23°C and a pressure of 1 standard atmosphere, wherein the cubic meter of the polypropylene in pellet form is calculated by dividing the mass of the polypropylene in pellet form by the bulk density of the polypropylene in pellet form
to maintain the taste of food in the package.
